# EUROPÄISCHE PATENTSCHRIFT

(11) **EP 3 807 117 B1**
(45) Veröffentlichungstag und Bekanntmachung des Hinweises auf die Patenterteilung: **04.10.2023**
(21) Anmeldenummer: 19731926.2
(22) Anmeldetag: 13.06.2019
(51) Int. Cl.: B60K 35/00, G02B 27/01, G02B 5/32

(54) **GERÄT ZUM DARSTELLEN EINES VIRTUELLEN BILDES**
DEVICE FOR DISPLAYING A VIRTUAL IMAGE
APPAREIL POUR REPRÉSENTER UNE IMAGE VIRTUELLE

(30) Priorität: 15.06.2018 DE 102018209623
(43) Veröffentlichungstag der Anmeldung: 21.04.2021
(73) Patentinhaber: Continental Automotive Technologies GmbH, 30165 Hannover (DE)
(72) Erfinder: KREIPE, Hans-Peter, 65824 Schwalbach a. Ts. (DE); RICHTER, Björn Pablo, 65824 Schwalbach a. Ts. (DE); MITSCH, Rudolf, 65824 Schwalbach a. Ts. (DE); VON SPIEGEL, Wolff, 65824 Schwalbach a. Ts. (DE)
(74) Vertreter: Continental Corporation
(86) Internationale Anmeldenummer: PCT/EP2019/065587
(87) Internationale Veröffentlichungsnummer: WO 2019/238875

(56) Entgegenhaltungen:
- EP-A1- 2 733 517
- WO-A1-2013/163347
- WO-A1-2017/060665
- DE-A1-102008 015 997
- JP-A- 2019 053 289
- Anonymous: "WHITE PAPER DIGILENS' WAVEGUIDE HUD TECHNOLOGY", , 20. Juli 2016 (2016-07-20), XP055615979, Gefunden im Internet: URL:https://www.digilens.com/wp-content/up loads/2017/08/WPSite-DigiLens-Tech.pdf [gefunden am 2019-08-28]

## Beschreibung

Die vorliegende Erfindung betrifft ein Gerät zum Darstellen eines Virtuellen Bildes.

Aus der US 2016/0124223 A1 ist ein Gerät zum Darstellen eines Virtuellen Bildes bekannt welches eine Bildgebende Einheit aufweist sowie einen Lichtwellenleiter mit Grenzflächen, an denen Totale Innere Reflexion auftritt, und einem in eine erste Richtung aufweitenden Lichtwellenleiter. Soll ein solches Gerät in einem Head-Up-Display für ein Fahrzeug eingesetzt werden, so sind Maßnahmen zum Schutz vor durch Sonneneinstrahlung hervorgerufene Reflexionen erforderlich, um einen Nutzer des Head-Up-Displays vor störenden oder auch sicherheitsgefährdenden Blendungen zu schützen.

Erfindungsgemäß ist dazu zumindest eine der Grenzflächen des aufweitenden Lichtwellenleiters als eine gekrümmte Fläche ausgebildet. Dies ermöglicht es, die Krümmung dazu zu nutzen, einfallendes Störlicht in eine Lichtfalle zu konzentrieren und dort unschädlich zu machen.

In einem Beispiel, welches nicht unter den beanspruchten Gegenstand fällt, weist ein Gerät einen in eine zweite Richtung aufweitenden Lichtwellenleiter auf, bei dem zumindest eine seiner Grenzflächen an denen Totale Innere Reflexion auftritt eine gekrümmte Fläche ist. Eine zweidimensional gekrümmte Fläche erleichtert weiter das Unschädlichmachen von Störlichteinflüssen.

Erfindungsgemäß ist vorgesehen, daß das Gerät mehrere in die erste Richtung aufweitende Lichtwellenleiter aufweist, und zu jedem dieser aufweitenden Lichtwellenleiter ein Einkoppelbereich vorhanden ist. Vorteilhafterweise verläuft die Krümmung mit einem Radius, der senkrecht zu einer zur Propagationsrichtung im jeweiligen Lichtwellenleiter parallelen Achse verläuft. Dies hat den Vorteil, daß keine Krümmung in Propagationsrichtung auftritt, was das Einhalten der Bedingungen für Totale Innere Reflexion vereinfacht.

Die Grenzflächen sind derart gekrümmt, daß parallel auf sie einfallendes Licht, beispielsweise von der Sonne kommendes Licht, auf einen Bereich konzentriert reflektiert wird, in dem ein Blendschutz angeordnet ist. Dieser dient als Lichtfalle. Von außen einfallendes Störlicht wird somit nicht zum Nutzer des Geräts hin reflektiert, sondern vom Blendschutz absorbiert.

Weitere Varianten und deren Vorteile sind auch der nachfolgenden Beschreibung von Ausführungsbeispielen anhand von Abbildungen entnehmbar.

### Figurenübersicht:

Fig.1 Head-Up-Display gemäß Stand der Technik
Fig.2 schematischer Strahlengang
Fig.3 schematischer Strahlengang mit Diffusor
Fig.4 Strahlengang mit gerichtetem Diffusor
Fig.5 Strahlengang mit mehreren Bildgebern
Fig.6 Strahlengang mit Bild im Unendlichen
Fig.7 Strahlengang mit virtueller Verdopplung
Fig.8 Strahlengang mit Lichtwellenleiter
Fig.9 Strahlengang mit Lichtwellenleiter
Fig.10 Head-Up-Display mit Lichtwellenleiter
Fig.11 Lichtwellenleiter mit zweidimensionaler Vergrößerung
Fig.12 Head-Up-Display mit Lichtwellenleiter
Fig.13 Lichtwellenleiter im Längsschnitt
Fig.14 Variante eines beispielhaften Geräts, welches nicht unter den Anspruch 1 fällt
Fig.15 Variante eines erfindungsgemäßen Geräts
Fig.16 zweidimensional gekrümmter Lichtwellenleiter, welcher nicht unter den Anspruch 1 fällt
Fig.17 eindimensional gekrümmter Lichtwellenleiter
Fig.18 Anwendung eines erfindungsgemäßen Geräts

### Figurenbeschreibung

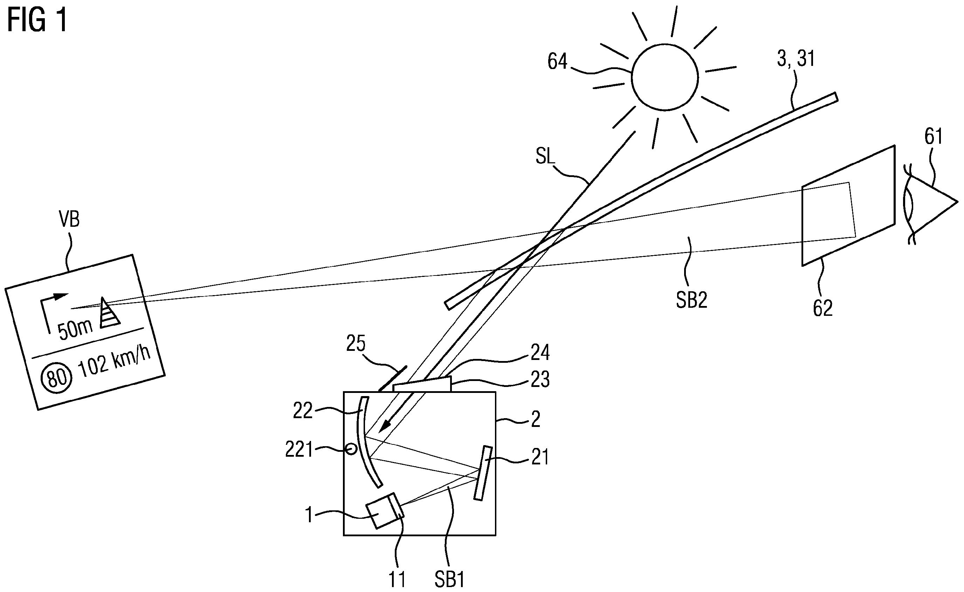

Fig.1 zeigt eine Prinzipskizze eines Head-Up-Displays gemäß Stand der Technik. Es weist einen Bildgenerator 1 auf, eine Optikeinheit 2 und eine Spiegeleinheit 3. Von einem Anzeigeelement 11 geht ein Strahlenbündel SB1 aus, welches von einem Faltspiegel 21 auf einen gekrümmten Spiegel 22 reflektiert wird, der es Richtung Spiegeleinheit 3, die hier als Windschutzscheibe 31 eines Fahrzeugs dargestellt ist, reflektiert. Von dort gelangt das Strahlenbündel SB2 Richtung Auge 61 eines Betrachters. Dieser sieht ein virtuelles Bild VB, welches sich außerhalb des Fahrzeugs oberhalb der Motorhaube oder sogar vor dem Fahrzeug befindet. Durch das Zusammenwirken von Optikeinheit 2 und Spiegeleinheit 3 ist das virtuelle Bild VB eine vergrößerte Darstellung des vom Anzeigeelement 11 angezeigten Bildes. Hier sind symbolisch eine Geschwindigkeitsbegrenzung, die aktuelle Fahrzeuggeschwindigkeit sowie Navigationsanweisungen dargestellt. So lange sich das Auge 61 innerhalb der durch ein Rechteck angedeuteten Eyebox 62 befindet, sind alle Elemente des virtuellen Bildes für das Auge 61 sichtbar. Befindet sich das Auge 61 außerhalb der Eyebox 62, so ist das virtuelle Bild VB für den Betrachter nur noch teilweise oder garnicht sichtbar. Je größer die Eyebox 62 ist, desto weniger eingeschränkt ist der Betrachter bei der Wahl seiner Sitzposition.

Die Krümmung des gekrümmten Spiegels 22 dient zum einen dazu, den Strahlengang aufzubereiten und somit für ein größeres Bild und eine größere Eyebox 62 zu sorgen. Zum anderen gleicht die Krümmung eine Krümmung der Windschutzscheibe 31 aus, sodaß das virtuelle Bild VB einer vergrößerten Wiedergabe des vom Anzeigeelement 11 dargestellten Bildes entspricht. Der gekrümmte Spiegel 22 ist mittels einer Lagerung 221 drehbar gelagert. Die dadurch ermöglichte Drehung des gekrümmten Spiegels 22 ermöglicht ein Verschieben der Eyebox 62 und somit eine Anpassung der Position der Eyebox 62 an die Position des Auges 61. Der Faltspiegel 21 dient dazu, daß der vom Strahlenbündel SB1 zurückgelegte Weg zwischen Anzeigeelement 11 und gekrümmtem Spiegel 22 lang ist, und gleichzeitig die Optikeinheit 2 dennoch kompakt ausfällt. Die Optikeinheit 2 wird durch eine transparente Abdeckung 23 gegen die Umgebung abgegrenzt. Die optischen Elemente der Optikeinheit 2 sind somit beispielsweise gegen im Innenraum des Fahrzeugs befindlichen Staub geschützt. Auf der Abdeckung 23 befindet sich weiterhin eine optische Folie 24, die einfallendes Sonnenlicht SL daran hindern soll, über die Spiegel 21,22 auf das Anzeigeelement 11 zu gelangen. Dieses kann durch dabei auftretende Wärmeentwicklung vorübergehend oder auch dauerhaft geschädigt werden. Um dies zu verhindern wird beispielsweise ein Infrarotanteil des Sonnenlichts SL mittels der optischen Folie 24 ausgefiltert. Ein Blendschutz 25 dient dazu, von vorne einfallendes Licht abzuschatten, sodaß es nicht von der Abdeckung 23 Richtung Windschutzscheibe 31 reflektiert wird, was eine Blendung des Betrachters hervorrufen würde. Außer dem Sonnenlicht SL kann auch das Licht einer anderen Störlichtquelle 64 auf das Anzeigeelement 11 gelangen.

Gleiche Bezugszeichen werden auch in den folgenden Figuren für gleiche oder gleichwirkende Elemente verwendet, und nicht notwendigerweise zu jeder Figur erneut beschrieben.

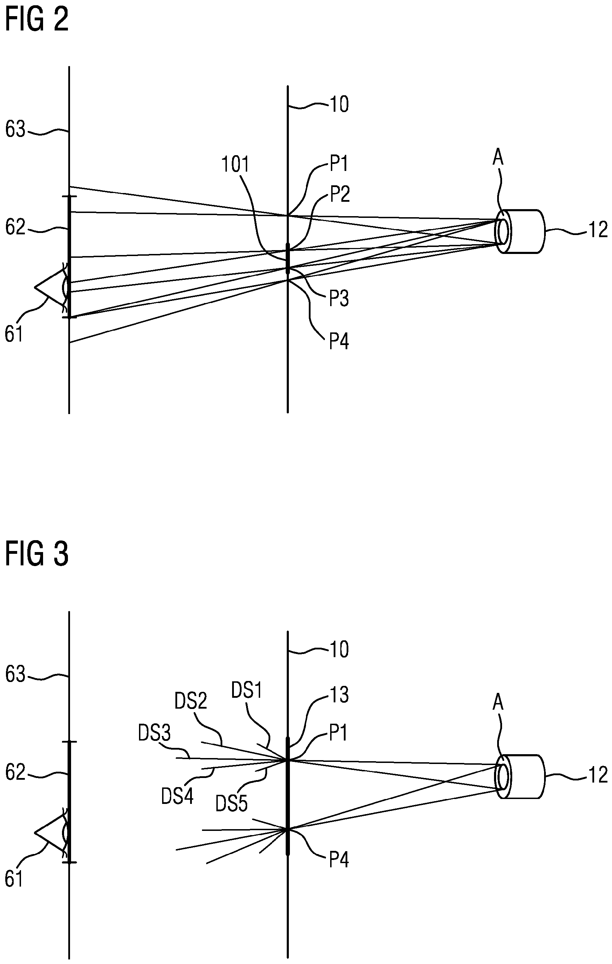

Die Fig. 2-4 zeigen einen vereinfachten schematischen Strahlengang in einem Head-Up-Display. Dabei sind die unterschiedlichen Spiegelungen der Übersichtlichkeit halber weggelassen. Man sieht links das Auge 61, in der Mitte die Bildebene 10, die sowohl dem Anzeigeelement 11 als auch dem virtuellen Bild VB entspricht, und rechts die Apertur A eines Bildgebers 12, der beispielsweise ein Spacial Light Modulator, auch SLM genannt, ist. Mit einem SLM wird Licht räumlich moduliert. Dies kann auf unterschiedliche Arten erfolgen. Eine spezielle Art SLM ist ein DMD-Projektor, wobei DMD für "Digital Micromirror Device" steht. Dies ist ein Gerät, bei dem entweder ein einzelner in X- und Y-Richtung beweglicher Mikrospiegel einen Laserstrahl über eine Bildfläche scannt, oder bei dem die Bildfläche durch eine Vielzahl flächig nebeneinander angeordneter Mikrospiegel gebildet ist, die von einer Lichtquelle beleuchtet werden. Die Eyebox 62 ist in der Betrachtungsebene 63 mittels einer verstärkten Linie und Begrenzung nach oben und unten kenntlich gemacht.

Fig.2 zeigt Punkte P1 bis P4 in der Bildebene 10. Man erkennt, daß der Punkt P1 aufgrund seiner Lage in der Bildebene 10 und der Größe der Apertur A nur aus Teilen der Eyebox 62 sichtbar ist. Der Punkt P4 ist nur außerhalb der Eyebox 62 sichtbar. Nur die Punkte P2 und P3 sind in der Eyebox 62 sichbar, von ihnen ausgehende Strahlen fallen auch ins Auge 61. Somit kann nur ein kleiner Bereich 101 der Bildebene 10 vom Auge 61 in dessen dargestellte Position erfaßt werden.

Fig.3 zeigt die gleiche Anordnung wie Fig. 2, allerdings mit einem in der Bildebene 10 angeordneten Diffusor 13. Dieser sorgt dafür, daß vom Bildgeber 12 her kommendes Licht diffus gestreut wird. Dies ist in den Punkten P1 und P4 mittels diffus gestreuter Strahlen DS1 - DS5 angedeutet, deren Richtung angibt, in welche Richtung diffus gestreuter wird, und deren Länge die Intensität in die entsprechende Richtung angibt. Man erkennt, daß die größte Intensität im Zentrum des entsprechenden in Fig.2 gezeigten Strahlenbündels verläuft, hier durch den diffus gestreuten Strahl DS3 verdeutlicht. Je größer der Winkel der anderen Strahlen DS1, DS2, DS4, DS5 zu dem Strahl DS3 ist, desto geringer ist ihre Intensität. Man erkennt, daß vom Punkt P1 der Strahl DS5 ins Auge 61 gelang. In die Eyebox 62 fallen weiterhin die diffus gestreuten Strahlen DS3 und DS4, während die Strahlen DS1 und DS2 außerhalb liegen, und somit verlorengehen. Ähnliches gilt für Punkt P4.

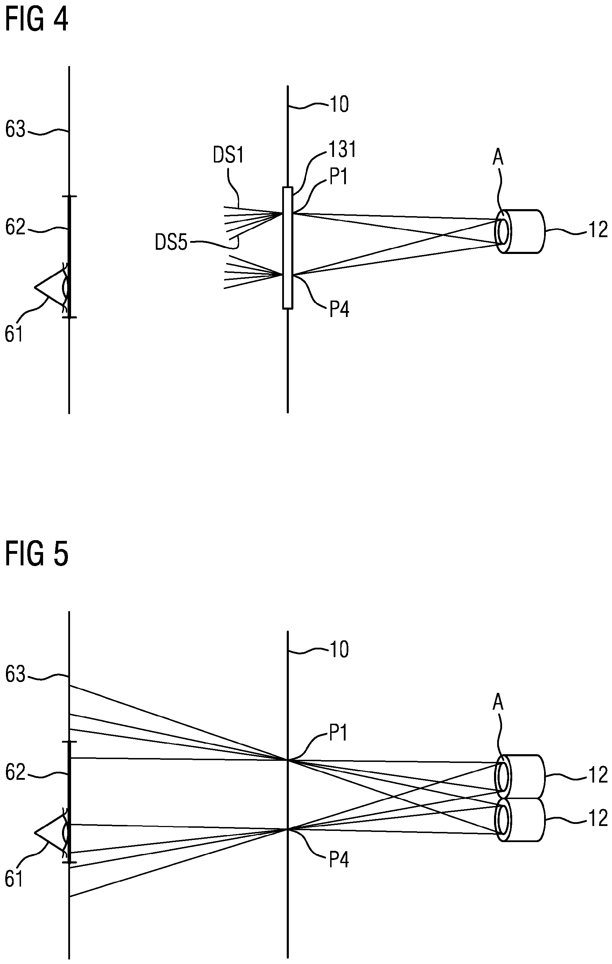

Fig. 4 zeigt die gleiche Anordnung wie Fig. 3, allerdings mit einem Diffusor 131, der eine spezielle Diffusionscharakteristik aufweist. Man erkennt, daß alle vom Punkt P1 ausgehenden diffus gestreuten Strahlen DS1 bis DS5 in etwa gleiche Intensität aufweisen, und ihre Winkelverteilung so ist, daß sie alle in die Eyebox 62 gelangen. Ein Lichtverlust tritt somit an dieser Stelle nicht auf.

Fig.5 zeigt eine ähnliche Anordnung wie die vorhergehenden Figuren, hier allerdings mit mehreren Bildgebern 12. Die Bildgeber 12 sind so aufeinander abgestimmt, daß in den Punkten P1 und P4 Lichtstrahlen in einem größeren Winkelbereich abgestrahlt werden, wodurch auch der Punkt P4 aus der Eyebox 62 heraus sichtbar ist. Durch eine Vergrößerung der Anzahl der Bildgeber 12 wird ein ähnlicher Effekt wie mittels eines Diffusors 13 bezüglich der Sichtbarkeit der Punkte P1 bis P4 in der gesamten Eyebox 62 erzielt.

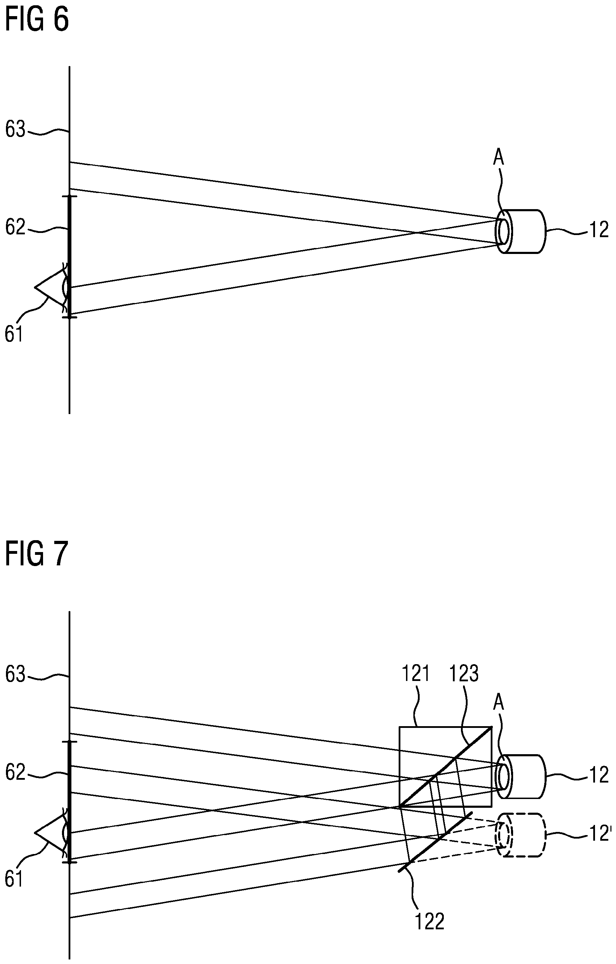

Fig.6 zeigt eine ähnliche Anordnung wie die vorhergehenden Figuren, hier fokussiert der Bildgeber 12 aber nicht auf eine Bildebene, sondern kollimiert ins unendliche. Die in der Betrachtungsebene 63 zu einem Punkt ankommenden Strahlen verlaufen jeweils parallel zueinander. Dies ermöglicht es, anstatt mehrere aufeinander abgestimmte Bildgeber 12 anzuordnen, wie in Fig.5 gezeigt, den einen Bildgeber 12 virtuell zu verdoppeln. Dies ist in den folgenden Figuren gezeigt.

Fig.7 zeigt eine ähnliche Anordnung wie Fig.6, hier allerdings mit virtueller Verdopplung des Bildgebers 12. Dazu ist ein Strahlteiler im Strahlengang des Bildgebers 12 angeordnet, der einen Teil der Strahlung auf einen Spiegel 122 reflektiert. Die Spiegelebene 123 des Strahlteilers 121 ist parallel zum Spiegel 122 ausgerichtet. Die Anzahl der vom Bildgeber 12 ausgehenden parallelen Strahlenbündel, von denen hier zwei gezeigt sind, wird verdoppelt, ihre Intensität jeweils halbiert. Somit treffen beide dargestellten Strahlenbündel in die Eyebox 62. Der virtuelle Bildgeber 12'ist gestrichelt angedeutet. Durch geeignete Anordnung von weiteren Strahlteilern und geeigneter Anpassung von deren Größe läßt sich erreichen, daß Strahlenbündel zu einem großen Winkelbereich von jedem Punkt der Eyebox 62 aus betrachtet werden können, wenn sich das Auge 61 dort befindet.

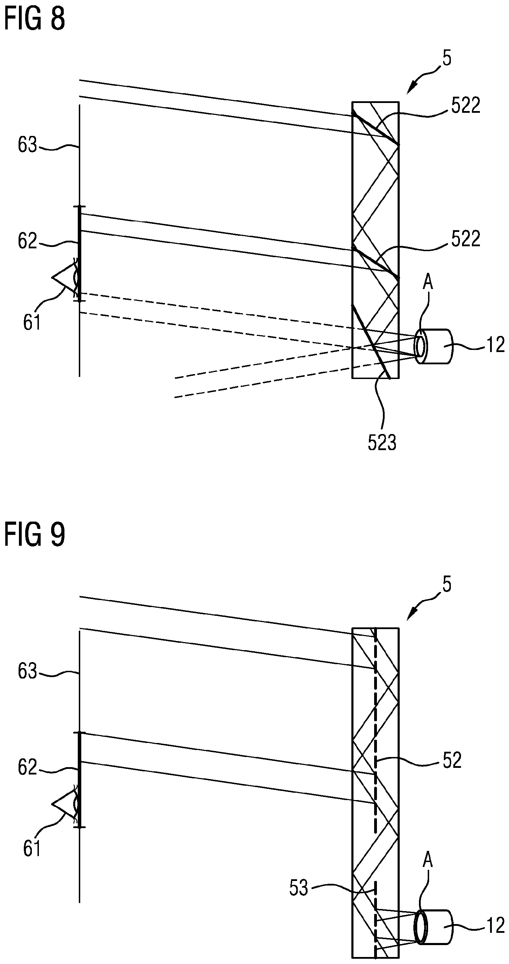

Fig.8 zeigt eine ähnliche Anordnung wie Fig.7. Allerdings sind hier der Strahlteiler 121 und der Spiegel 122 durch einen Lichtwellenleiter 5 ersetzt. Der Lichtwellenleiter 5 weist eine Spiegelebene 523 auf, mit der vom Bildgeber 12 kommendes Licht in den Lichtwellenleiter 5 eingekoppelt wird. Die Verlängerung der ursprünglichen Strahlrichtung ist gestrichelt angedeutet. Das in dem Lichtwellenleiter 5 eingekoppelte Licht wird an dessen Grenzflächen totalreflektiert und wird somit innerhalb des Lichtwellenleiters 5 geleitet. Der Lichtwellenleiter 5 weist weiterhin Spiegelebenen 522 auf, die teildurchlässig sind und jeweils einen Teil des auf sie auftreffenden Lichts aus dem Lichtwellenleiter 5 auskoppeln. Dies ist der Übersichtlichkeit halber mit dem parallelen Strahlenbündel zu nur einem Winkel gezeigt. Man erkennt das Prinzip der Vervielfachung der parallelen Strahlenbündel. Durch geeignete Anordnung läßt sich eine hinreichend gleichmäßige Ausleuchtung der Eyebox 62 erzielen. Das Einkoppeln und das Auskoppeln können anstatt mittels Spiegelebenen 522,523 auch mittels an der Oberfläche des Lichtwellenleiters 5 angeordneter Beugungsgitter (hier nicht dargestellt) oder auf andere, dem Fachmann geläufige Art und Weise, erfolgen.

Fig.9 zeigt eine ähnliche Anordnung wie Fig.8, allerdings weist hier der Lichtwellenleiter 5 ein Einkoppelhologramm 53 und ein Auskoppelhologramm 52 auf, die als Volumenhologramme in der Mitte des Lichtwellenleiters 5 angeordnet sind. Auch hier wird nur das Prinzip angedeutet. Es versteht sich, daß durch geeignete Wahl der Hologramme erreicht werden kann, daß die gesamte Eyebox 62 gleichmäßig mit parallelen Strahlenbündeln zu allen gewünschten Winkeln ausgeleuchtet wird.

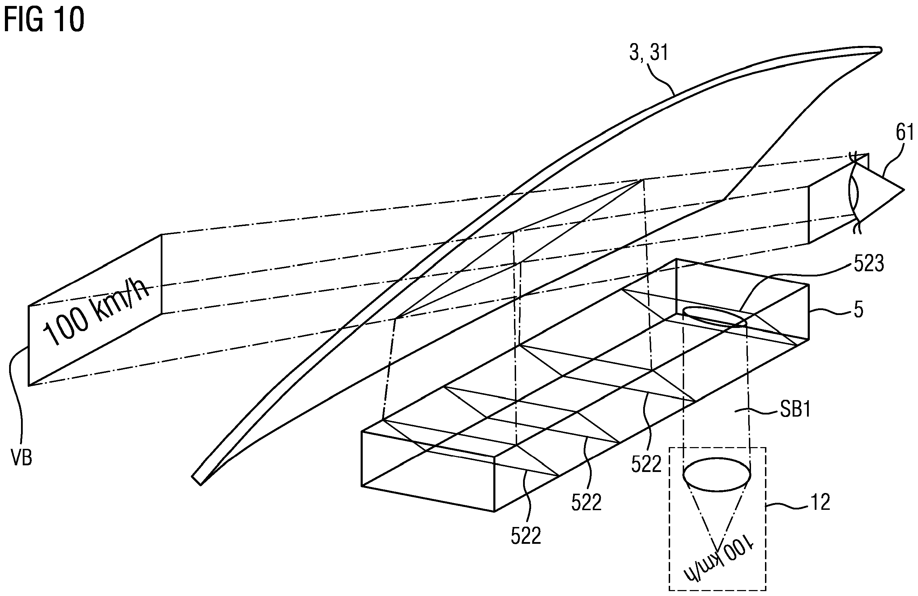

Fig.10 zeigt ein Head-Up-Display ähnlich zu Fig.1, hier allerdings in räumlicher Darstellung und mit einem Lichtwellenleiter 5. Man erkennt den schematisch angedeuteten Bildgeber 12, der ein paralleles Strahlenbündel SB1 erzeugt, welches mittels der Spiegelebene 523 in den Lichtwellenleiter 5 eingekoppelt wird. Mehrere Spiegelebenen 522 reflektieren jeweils einen Teil des auf sie auftreffenden Lichts Richtung Windschutzscheibe 31, der Spiegeleinheit 3. Von dieser wird das Licht Richtung Auge 61 reflektiert, welches ein virtuelles Bild VB über der Motorhaube bzw. in noch weiterer Entfernung vor dem Fahrzeug sieht.

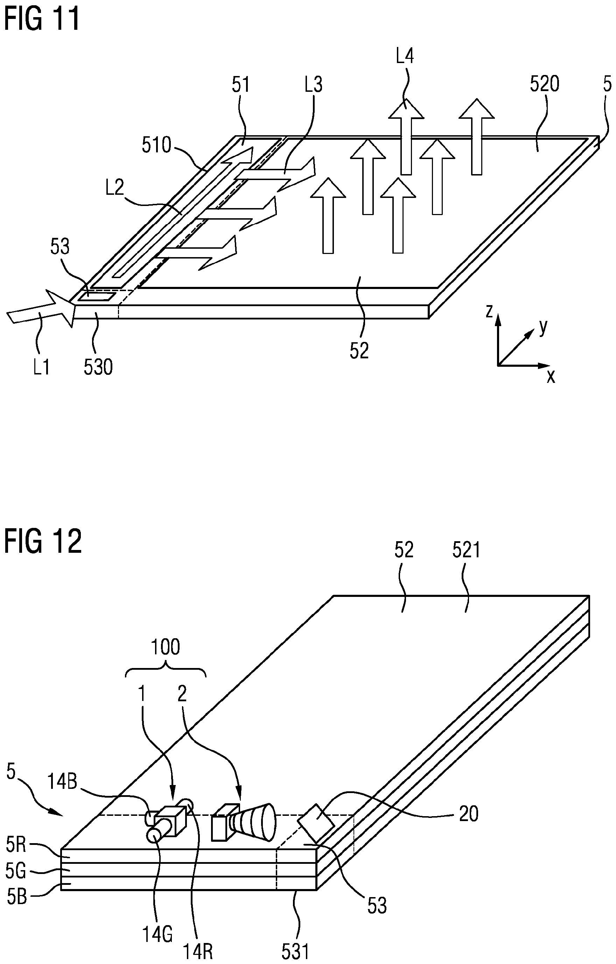

Fig.11 zeigt in schematischer räumlicher Darstellung einen Lichtwellenleiter 5 mit zweidimensionaler Vergrößerung. Er weist einen ersten Lichtwellenleiter 510 auf, der das in ihm propagierende Lichtbündel L2 in mehrere Lichtbündel L3 aufspaltet, und so in y-Richtung aufweitend ist. Die Lichtbündel L3 propagieren in einem zweiten Lichtwellenleiter 520, der diese in mehrere Lichtbündel L4 aufspaltet, und so in x-Richtung aufweitend ist. In einem dritten Lichtwellenleiter 530 wird ein von außen kommendes Lichtbündel L1 in den Lichtwellenleiter 5 eingekoppelt, um im ersten Lichtwellenleiter 510 als Lichtbündel L2 zu propagieren. Im unteren linken Bereich erkennt man im dritten Lichtwellenleiter 530 ein Einkoppelhologramm 53, mittels dessen von einem nicht dargestellten Bildgeber 12 kommendes Licht L1 in den Lichtwellenleiter 5 eingekoppelt wird. In diesem breitet es sich im ersten Lichtwellenleiter 510 nach in der Zeichnung rechts oben aus, entsprechend dem Pfeil L2. In diesem Bereich des Lichtwellenleiters 5 befindet sich ein Falthologramm 51, das ähnlich wie viele hintereinander angeordnete teildurchlässige Spiegel wirkt, und ein in Y-Richtung verbreitertes, sich in X-Richtung ausbreitendes Lichtbündel erzeugt. Dies ist durch drei Pfeile L3 angedeutet. In dem sich in der Abbildung nach rechts erstreckenden Teil des Lichtwellenleiters 5, dem zweiten Lichtwellenleiter 520, befindet sich ein Auskoppelhologramm 52, welches ebenfalls ähnlich wie viele hintereinander angeordnete teildurchlässige Spiegel wirkt, und durch Pfeile L4 angedeutet Licht in Z-Richtung nach oben aus dem Lichtwellenleiter 5 auskoppelt. Hierbei erfolgt eine Verbreiterung in X Richtung, sodaß das ursprüngliche einfallende Lichtbündel L1 als in zwei Dimensionen vergrößertes Lichtbündel L4 den Lichtwellenleiter 5 verläßt. Der Lichtwellenleiter 5 weist somit einen in y-Richtung aufweitenden ersten Lichtwellenleiter 510 auf, der das Falthologramm 51 aufweist, einen in x-Richtung aufweitenden zweiten Lichtwellenleiter 520, der das Auskoppelhologramm 52 aufweist, und einen dritten Lichtwellenleiter 530, der das Einkoppelhologramm 53 aufweist.

Fig.12 zeigt in räumlicher Darstellung ein Head-Up-Display mit drei Lichtwellenleitern 5R, 5G, 5B, die übereinanderliegend angeordnet sind, und für je eine Elementarfarbe Rot, Grün und Blau stehen. Sie bilden gemeinsam den Lichtwellenleiter 5. Die in den Lichtwellenleitern 5 vorhandenen Hologramme 51,52, 53 sind wellenlängenabhängig, sodaß jeweils ein Lichtwellenleiter 5R, 5G, 5B für eine der Elementarfarben verwendet wird. Oberhalb des Lichtwellenleiters 5 ist ein Bildgenerator 1 und eine Optikeinheit 2 dargestellt. Beide zusammen werden oft auch als bildgebende Einheit oder PGU 100 bezeichnet. Die Optikeinheit 2 weist einen Spiegel 20 auf, mittels dessen das vom Bildgenerator 1 erzeugte und von der Optikeinheit 2 geformte Licht in Richtung des jeweiligen Einkoppelhologramms 53 umgelenkt wird. Das von der Bildgebenden Einheit 100 erzeugte Licht wird im Einkoppelbereich 531, in dem sich die jeweiligen Einkoppelhologramme 53 befinden, in den Lichtwellenleiter 5 eingekoppelt. Es verläßt den Lichtwellenleiter 5 im Anzeigebereich 521, in dem sich die jeweiligen Auskoppelhologramme 52 befinden. Der Bildgenerator 1 weist drei Lichtquellen 14R, 14G, 14B für die drei Elementarfarben auf. Man erkennt, daß die gesamte dargestellte Einheit eine im Vergleich zu ihrer lichtabstrahlenden Fläche geringe Gesamtbauhöhe aufweist.

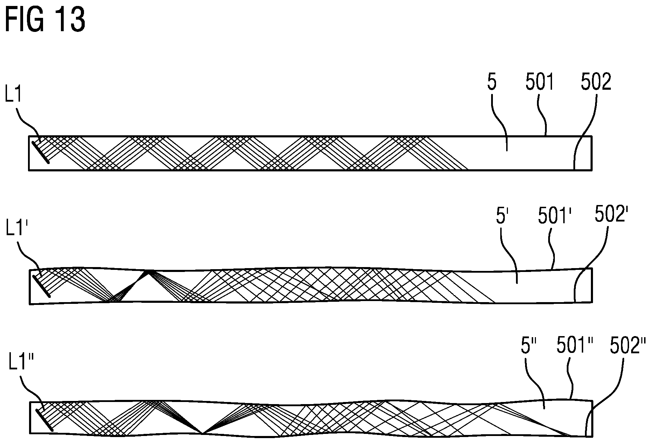

Fig 13 zeigt drei Lichtwellenleiter 5 im Längsschnitt. Der obere Lichtwellenleiter 5 weist eine ideal ebene obere Begrenzungsflächen 501 auf und eine ideal ebene untere Begrenzungsfläche 502, welche beide parallel zueinander angeordnet sind. Man erkennt, daß ein paralleles Lichtbündel L1, welches sich von links nach rechts im Lichtwellenleiter 5 ausbreitet, aufgrund der Parallelität und Ebenheit der oberen und unteren Begrenzungsflächen 501,502 im Querschnitt unverändert und parallel verbleibt. Der mittlere Lichtwellenleiter 5' weist obere und untere Begrenzungsflächen 501',502' auf, die nicht vollkommen eben und auch nicht zumindest abschnittsweise parallel zueinander sind. Der Lichtwellenleiter 5' hat somit eine in Lichtausbreitungsrichtung variierende Dicke. Man erkennt, daß das Lichtbündel L1' schon nach wenigen Reflexionen nicht mehr parallel ist und auch keinen homogenen Querschnitt aufweist. Der untere Lichtwellenleiter 5" hat obere und untere Begrenzungsflächen 501",502", die noch stärker von der Idealform abweichen als die oberen beiden. Das Lichtbündel L1" weicht somit ebenfalls noch stärker von der Idealform ab.

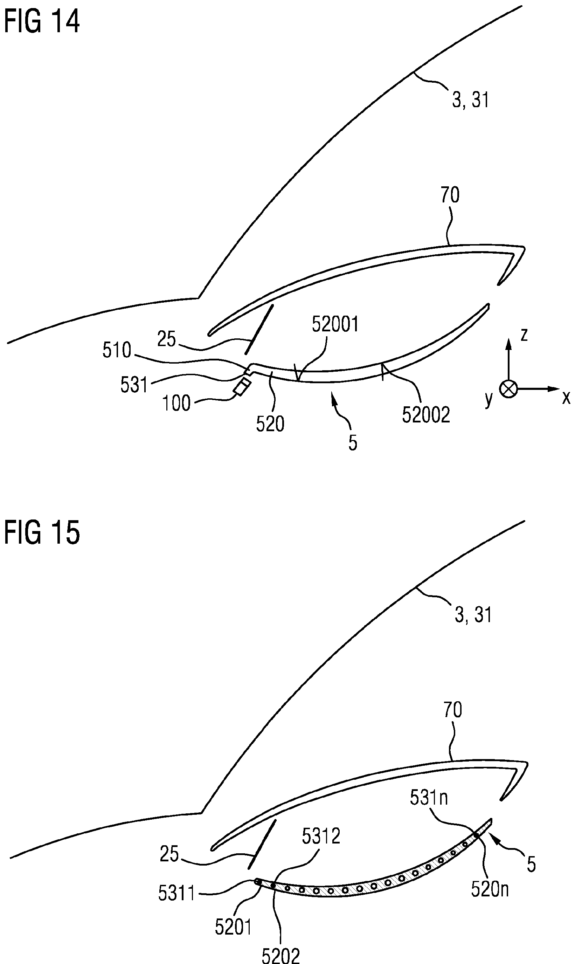

Fig. 14 zeigt eine erste Variante eines nicht unter den Anspruch 1 fallenden Geräts welches in einem Head-Up-Display eines Fahrzeugs eingesetzt ist in schematischer geschnittener Darstellung. Man erkennt die Bildgebende Einheit 100, die in einen Einkoppelbereich 531 des Lichtwellenleiters 5 einkoppelt. Dieser weist einen ersten Lichtwellenleiter 510 auf, der in y-Richtung aufweitet. Die y-Richtung verläuft in der Abbildung senkrecht in die Zeichenebene hinein. Ein zweiter Lichtwellenleiter 520 schließt sich an, der gekrümmte Grenzflächen 52001,52002 aufweist. Licht tritt nach oben, also im wesentlichen in z-Richtung aus dem zweiten Lichtwellenleiter aus, durchläuft ein Deckglas 70 und wird an der Windschutzscheibe 31 in Richtung eines hier nicht dargestellten Auges des Betrachters reflektiert. Von außen einfallendes Störlicht wird aufgrund der Krümmung des Lichtwellenleiters 5 in Richtung Blendschutz 25 reflektiert und dort absorbiert.

Fig.15 zeigt eine Variante eines erfindungsgemäßen Geräts. Hier weist der Lichtwellenleiter 5 eine Vielzahl von Lichtwellenleitern 5201,5202, ... 520n auf, die im in der Zeichenebene liegenden Schnitt gekrümmt sind, sich aber senkrecht in die Zeichenebene hinein gradlinig erstrecken. Jeder dieser Lichtwellenleiter 5201,5202, ... 520n weist einen Einkoppelbereich 5311,5312, ... , 531n auf, in den jeweils eine zugehörige, hier nicht dargestellte Bildgebende Einheit einkoppelt. Die übrigen Elemente entsprechen den zuvor beschriebenen.

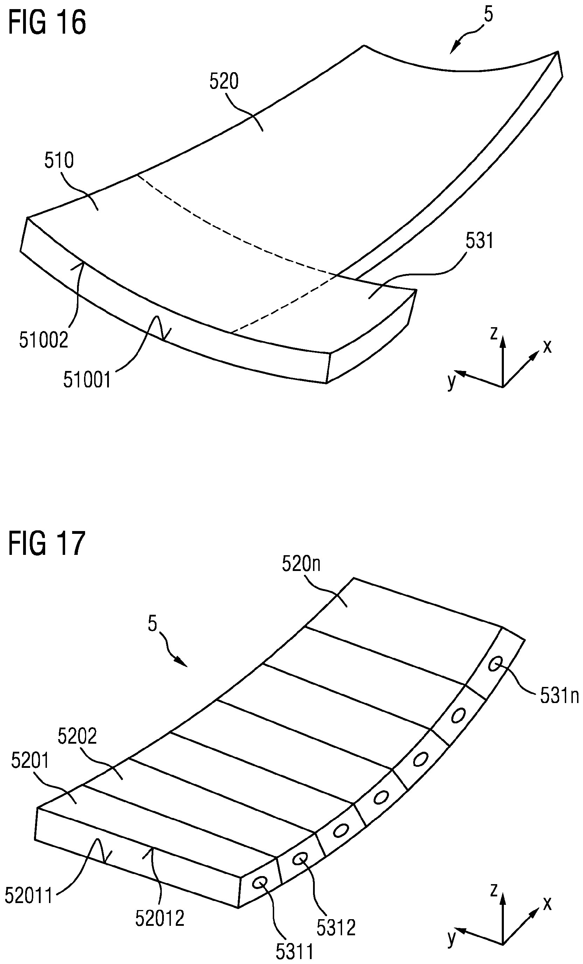

Fig.16 zeigt beispielhaft einen nicht unter den Anspruch 1 fallenden zweidimensional gekrümmten Lichtwellenleiter 5 in räumlicher Darstellung. Er weist einen ersten Lichtwellenleiter 510 auf, welcher gekrümmte Grenzflächen 51001,51002 aufweist, einen gekrümmten zweiten Lichtwellenleiter 520 und einen Einkoppelbereich 531.

Fig.17 zeigt erfindungsgemäß einen nur eindimensional gekrümmten Lichtwellenleiter 5 auf, der eine Vielzahl von parallel zueinander angeordneten Lichtwellenleitern 5201,5202, ..., 520n aufweist. Jeder von diesen weist einen Einkoppelbereich 5311,5312, ...,531n auf. Wenn die Lichtwellenleitern 5201,5202, ..., 520n wesentlich schmaler sind, wird somit das darzustellende Bild quasi in Zeilen entlang der y-Richtung aufgebaut, die in x-Richtung benachbart zueinander sind.

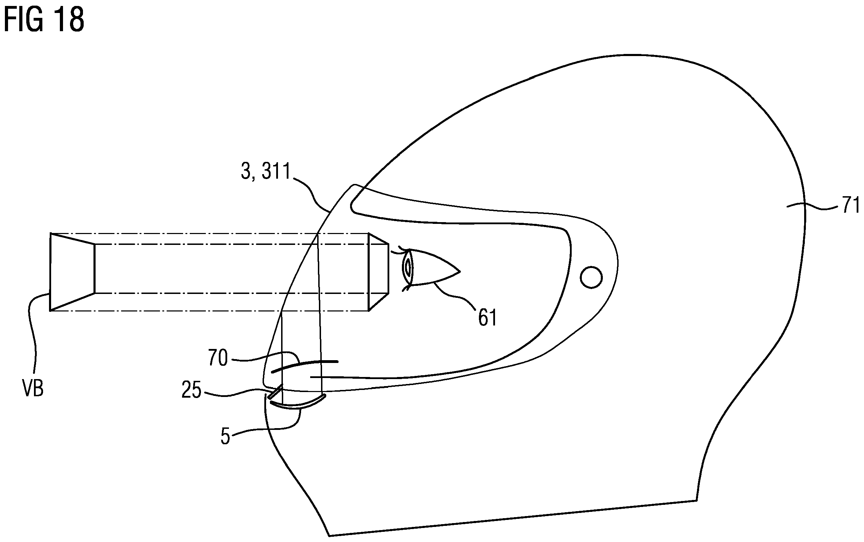

Fig.18 zeigt eine Anwendung eines erfindungsgemäßen Geräts in einem Motorradhelm 71. Dessen Visier 311 dient als Spiegeleinheit für das vom erfindungsgemäßen Lichtwellenleiter 5 her kommende Licht. Das erzeugte Virtuelle Bild VB ist für das Auge 61 weit vor dem Visier 311 sichbar.

Mit anderen Worten betrifft die Erfindung ein Head-Up-Display mittels Bildlichtleitung durch eine gekrümmte Auskoppeloberfläche. Reflektionen an einer solchen Auskoppeloberfläche machen herkömmlicherweise ein separates Bauteil oder eine geneigte Einbaulage erforderlich. Mittels der gekrümmten Auskoppeloberfläche ist es ermöglicht, die Oberflächenkrümmung mit einer absorbierenden Fläche so auszulegen, daß eine Lichtfalle für ambientes Licht entsteht und einhergehend damit der zu nutzende Bauraum minimiert wird. Zur Bauraumoptimierung eines Head-Up-Displays auf Basis eines holographischen Lichtwellenleiters 5 ist eine erfindungsgemäße Idee diejenige, den holographischen Lichtwellenleiter 5 selbst in einer derartigen Art und Weise so auszuführen, daß durch eine direkte Krümmung des Lichtwellenleiters 5 in Form eines klassischen Deckglases als Lichtfalle der Bauraumbedarf deutlich reduziert wird und optimal ausgenutzt wird. Die Ausführung sieht vor, von der Seite als Zeilendisplay einzukoppeln mit den Lichtwellenleitern 5201,5202, ...,520n als Auskoppelelementen zur Strahlaufweitung passend zur Bildhöhe. Für Anwendungen außerhalb des Fahrzeugbereichs ist es in Weiterbildung der Erfindung ermöglicht, eine gekrümmte Oberfläche als "Private-View-Display" einzusetzen, als Werbetafeln, zur privaten virtuellen Anprobe in normaler Umgebung, oder ähnlichem.

Weitere Details sind den Ansprüchen oder der Beschreibungseinleitung zu entnehmen.

### Bezugszeichenliste

1 Bildgenerator
100 PGU (Bildgebende Einheit)
10 Bildebene
101 Bereich (der Bildebene)
11 Anzeigeelement
12 Bildgeber
121 Strahlteiler
122 Spiegel
123 Spiegelebene
13,131 Diffusor
14, 14R, 14G, 14B Lichtquelle
2 Optikeinheit
20 Spiegel
21 Faltspiegel
22 gekrümmter Spiegel
221 Lagerung
23 transparente Abdeckung
24 optische Folie
25 Blendschutz
3 Spiegeleinheit
31 Windschutzscheibe
311 Visier
4 Steuereinheit
41 Steuereinheit
411 Leitung
411R,411G,411B Leitung
413R,413G,413B Leitung
5 Lichtwellenleiter
500 Stapel (von Lichtwellenleitern)
501 obere Begrenzungsfläche
502 untere Begrenzungsfläche
503 linke Begrenzungsfläche
504 rechte Begrenzungsfläche
505 vordere Begrenzungsfläche
506 hintere Begrenzungsfläche
507 Zusatzinformation
51 Falthologramm
510 erster Lichtwellenleiter (in y-Richtung aufweitend)
51001,51002 Grenzfläche
5101,...,510n erster Lichtwellenleiter
52 Auskoppelhologramm
520 zweiter Lichtwellenleiter (in x-Richtung aufweitend)
52001,52002 Grenzfläche
521 Auskoppelbereich
522 Spiegelebene
523 Spiegelebene
53 Einkoppelhologramm
530 dritter Lichtwellenleiter (einkoppelnd)
531 Einkoppelbereich
532 Einkoppelstruktur
54 Substrat
55 Deckschicht
56 Hologrammschicht
60 Betrachter
61 Auge
62 Eyebox
63 Betrachtungsebene
64 Störlichtquelle
70 Deckglas
71 Motorradhelm
A Apertur
D Abstand
D_{D} Dicke Deckschicht
D_{S} Dicke Substrat
DS1...DS5 diffus gestreute Strahlen
L1 ... L4 Licht
L41,L42 Teillichtbündel
LPR,LPG,LPB Lichtpaket
LS1,LS2 Lichtstrahlen
P1 ... P4 Punkt (auf der Bildebene)
RE Reale Ebene
SB1,SB2 Strahlenbündel
SL Sonnenlicht
VB,VB',VB" virtuelles Bild
VE Virtuelle Ebene
AR,AG,AB Wellenlänge

## Patentansprüche

1. Gerät zum Darstellen eines Virtuellen Bildes (VB), mit einer bildgebende Einheit (100) und einem Lichtwellenleiter (5) mit Grenzflächen (52011, 52012), an denen totale innere Reflexion auftritt, wobei zumindest eine der Grenzflächen (52011, 52012) des aufweitenden Lichtwellenleiters (510,520) eine gekrümmte Fläche ist, **dadurch gekennzeichnet, dass** das Gerät einen Blendschutz (25) aufweist, wobei die Grenzflächen (52011, 52012) parallel einfallendes Licht auf einen Bereich konzentrieren, in dem der Blendschutz (25) angeordnet ist, und dass der Lichtwellenleiter (5) mehrere in eine erste Richtung (y,x) aufweitenden Lichtwellenleiter (5201, 5202, ... , 520n) mit jeweils einem Einkoppelbereich (5311,5312, ... ,531n) aufweist, die parallel zueinander angeordnet sind und durch die ein darzustellendes Bild in Zeilen aufgebaut wird.

## Claims

1. Device for displaying a virtual image (VB), comprising a picture-generating unit (100) and an optical waveguide (5) having interfaces (52011, 52012) at which total internal reflection occurs, at least one of the interfaces (52011, 52012) of the widening optical waveguide (510, 520) being a curved surface, **characterized in that** the device has a glare shield (25), the interfaces (52011, 52012) concentrating light that is incident in parallel fashion on a region in which the glare shield (25) is arranged, and **in that** the optical waveguide (5) has a plurality of optical waveguides (5201, 5202, ..., 520n) which widen in a first direction (y, x) and each have an input-coupling region (5311, 5312, ..., 531n), which are arranged parallel to one another and by means of which an image to be displayed is constructed in lines.

## Revendications

1. Appareil pour représenter une image virtuelle (VB), comprenant une unité de formation d'image (100) et un guide d'ondes optiques (5) muni de surfaces limites (52011, 52012) sur lesquelles se produit une réflexion interne totale, dans lequel au moins l'une des surfaces limites (52011, 52012) du guide d'ondes optiques (510, 520) qui s'évase est une surface courbe,
**caractérisé en ce que** l'appareil présente un dispositif anti-éblouissement (25), dans lequel les surfaces limites (52011, 52012) focalisent la lumière incidente en parallèle sur une zone dans laquelle est disposé le dispositif anti-éblouissement (25), et **en ce que** le guide d'ondes optiques (5) présente plusieurs guides d'ondes optiques (5201, 5202, ..., 520n) s'évasant dans une première direction (y, x), ayant respectivement une zone d'injection (5311, 5312, ..., 531n), qui sont disposés en parallèle les uns aux autres et qui constituent par rangées une image à représenter.
